# FASCICULE DE BREVET EUROPEEN

(11) **EP 3 127 220 B1**
(45) Date de publication et mention de la délivrance du brevet: **02.09.2020**
(21) Numéro de dépôt: 15716563.0
(22) Date de dépôt: 27.03.2015
(51) Int. Cl.: H02K 5/14, H01R 39/38

(54) **DEMARREUR POUR MOTEUR THERMIQUE AVEC PLATINE SUPPORT DE PORTE-BALAIS ET PORTE-BALAI**
STARTERMOTOR MIT BÜRSTENHALTERSTÜTZPLATTE UND BÜRSTENHALTER
STARTER MOTOR WITH BRUSH HOLDER SUPPORT PLATE AND BRUSH HOLDER

(30) Priorité: 31.03.2014 FR 1452789
(43) Date de publication de la demande: 08.02.2017
(73) Titulaire: Valeo Equipements Electriques Moteur, 94046 Créteil Cedex (FR)
(72) Inventeur: VEROT, Jacques, F-69002 Lyon (FR); GENTIL, Maximilien, F-69960 Corbas (FR); LIU, Jun-Sh, F-94046 Creteil Cedex (FR)
(74) Mandataire: Prigent, Pierre
(86) Numéro de dépôt international: PCT/FR2015/050794
(87) Numéro de publication internationale: WO 2015/150672

(56) Documents cités:
- DE-A1- 19 853 641
- JP-A- H11 234 968
- JP-U- H0 578 165
- US-A1- 2009 066 185
- US-A1- 2010 109 492

## Description

La présente invention concerne le domaine des démarreurs pour moteur thermique de véhicule automobile. Plus particulièrement, l'invention concerne un démarreur avec un porte-balai prévu pour être reçu sur une platine.

Pour les moteurs électriques à collecteur tels que les moteurs à courant continu ou les moteurs universels, des balais, généralement à base de carbone, portés par le stator viennent en contact «électrique avec le collecteur du rotor pour assurer la connexion électrique entre stator et rotor. Les balais sont montés de façon coulissante dans des porte-balais et sollicités élastiquement vers le collecteur par un ressort agencé entre le fond du porte-balai et le balai. Il est connu de monter les porte-balais sur une platine qui est fixée sur le stator, la platine présentant un trou central pour le passage du collecteur et les porte-balais étant disposés radialement autour du trou central pour positionner les balais par rapport au collecteur. De telles platines sont par exemple décrites dans US 7,256,527 B2, US 8,395,297 B2 et JP 7-67296. Pour monter les porte-balais sur la platine, celle-ci présente des encoches ou autres éléments de guidage avec lesquels coopère la base des porte-balais. Le montage est réalisé en engageant les porte-balais sur la platine depuis le trou central de passage du collecteur vers la périphérie de la platine. La platine présente en outre une butée pour chaque porte-balai afin de l'arrêter radialement en direction de la périphérie de la platine, ce qui évite que les porte-balais puissent cogner contre le carter du moteur.

Ces platines ont néanmoins pour inconvénient de rendre complexe et délicat le montage des porte-balais au moteur. En effet, il est nécessaire dans une première étape de monter les porte-balais sur la platine et d'y insérer les balais, puis dans une deuxième étape de monter la platine portant les porte-balais et les balais sur le stator du moteur tout en faisant passer le collecteur à travers le trou de passage central de la platine prévu à cet effet. De ce fait, il est nécessaire de maintenir en position les porte-balais sur la platine entre la première étape et la deuxième étape, ce qui est généralement obtenu par un montage avec un ajustement serré des porte-balais sur la platine ou par un organe de retenu agencé sur la platine pour maintenir le porte-balai en place sur la platine. Mais il est également nécessaire de retenir l'ensemble des balais dans les porte-balais entre la première étape et la deuxième étape, ce qui est particulièrement délicat en pratique, bien qu'une fois en place, il n'est plus nécessaire de retenir les balais dans les porte-balais puisque c'est ce dernier qui les maintiendra en place.

Le document JPH0578165U décrit un démarreur suivant le préambule de la revendication 1. Le document DE19853641 décrit une platine en tôle métallique ayant des glissières issue de la platine et formées par découpage et déformation de la tôle.

Le but de la présente invention est de fournir une solution permettant de simplifier le montage des porte-balais et balais sur le stator du moteur.

A cette fin, la présente invention propose un démarreur pour moteur thermique de véhicule automobile tel que définit dans la revendication 1.

Ainsi le porte balai est monté par la périphérie vers le trou de passage centrale et est maintenu par la butée.

Suivant des modes de réalisation préférés, la platine support de porte-balais selon l'invention comprend une ou plusieurs des caractéristiques suivantes :
- le porte balai est éloigné de la culasse. Ainsi comme le porte balai monté sur la platine ne touche pas la culasse, le porte balais ne transmet pas directement ces vibrations à la culasse lorsque le collecteur tourne. En effet la platine qui est de préférence monté entre le palier et la culasse du moteur electrique du démarreur atténue les vibrations par rapport au cas ou le porte balai serait en appuie contre la culasse du moteur du porte balais. Cette atténuation des vibrations permet de faire moins de bruits. En effet, dans le cas ou au moins une des butées serait la paroie de la culasse, la culasse provoquerait un bruit plus important.
- l'au moins une butée est métallique. Ainsi du fait de la solidité de la butée une seule butée est nécessaire et donc la platine est moins encombrante.
- le porte balai comprend sur une face perpendiculaire à la face principale de la platine entourant le passage, une ouverture permettant à une tresse du balai de coulisser pendant la durée de vie du balai nécessaire lors de l'usure du balai contre le collecteur. Ainsi il y a un meilleur encombrement axiale de la machine.
- la butée est prévue pour s'escamoter élastiquement sous l'action du porte-balai sur la butée lors du montage du porte-balai en liaison glissière sur la platine dans le sens allant de la périphérie de la platine vers le trou de passage central ;
- la butée est en outre agencée pour que, après montage du porte-balai en liaison glissière sur la platine, la butée s'oppose rigidement également au déplacement du porte-balai dans le sens allant de la périphérie de la platine vers le trou de passage central ;
- la butée est réalisée sous la forme d'une lame élastique s'étendant sensiblement radialement par rapport au trou de passage central, la lame étant agencée par une extrémité sur la platine du côté vers la périphérie de la platine, l'extrémité opposée de la lame étant libre et disposée du côté vers le trou de passage central laquelle extrémité opposée est prévue pour venir en contact avec le porte-balai pour s'opposer rigidement au déplacement de ce dernier dans le sens allant du trou de passage central vers la périphérie de la platine, la butée étant prévue pour s'escamoter élastiquement par flexion de la lame élastique sous l'action du porte-balai lors du montage du porte-balai en liaison glissière sur la platine dans le sens allant de la périphérie de la platine vers le trou de passage central ;
- la lame formant butée est prévue pour s'escamoter élastiquement soit en direction de la face de la platine qui est opposée à celle recevant le porte-balai, soit latéralement par rapport à la direction de la liaison glissière entre le porte-balai et la platine.
- la butée vient de matière avec la platine ;
- les éléments de guidage viennent de matière avec la platine ;
- la platine est obtenue par découpage et déformation plastique d'une tôle ;

Selon un autre aspect, l'invention propose aussi un porte-balai pour moteur électrique prévu pour être monté sur une platine support de porte-balais selon l'invention, le porte-balai comprenant :
- une base conformée pour pouvoir engager en liaison glissière les éléments de guidage de la platine ; et
- un évidement dans la base apte à être engagé par la butée anti-retour de la platine pour s'opposer rigidement au déplacement du porte-balai au moins dans le sens allant du trou de passage central vers la périphérie de la platine.

Suivant un mode de réalisation préféré, le porte-balai est prévu pour être monté sur une platine support de porte-balais selon le mode de réalisation préféré mentionné plus haut dans lequel la butée est réalisée sous la forme d'une lame élastique, l'évidement dans la base du porte-balai étant agencé dans la face inférieure du porte-balai et le porte-balai comprenant un chanfrein agencé en partie inférieure de la base lequel chanfrein est prévu pour engager la lame formant la butée anti-retour de la platine et l'escamoter élastiquement lors du montage du porte-balai en liaison glissière sur la platine dans le sens allant de la périphérie de la platine vers le trou de passage central.

l'invention propose encore un ensemble porte-balais pour moteur électrique, comprenant :
- une platine support de porte-balais selon l'invention ; et
- au moins un porte-balai reçu dans les éléments de guidage de la platine ; dans lequel la butée anti-retour de la platine s'oppose rigidement au déplacement du porte-balai au moins dans le sens allant du trou de passage central vers la périphérie de la platine.

Suivant un mode de réalisation préféré, le porte-balai est selon l'invention, la butée anti-retour de la platine étant engagée dans l'évidement dans la base du porte-balai pour s'opposer rigidement au déplacement du porte-balai au moins dans le sens allant du trou de passage central vers la périphérie de la platine.

D'autres caractéristiques et avantages de l'invention apparaîtront à la lecture de la description qui suit d'un mode de réalisation préféré de l'invention, donnée à titre d'exemple et en référence au dessin annexé.
La figure 1 représente une vue d'un ensemble porte-balais pour moteur électrique selon l'invention.
La figure 2 montre la platine de l'ensemble porte-balais de la figure 1.
La figure 3 montre un des porte-balais de l'ensemble porte-balais de la figure 1.

Selon un aspect, l'invention propose une platine support de porte-balais pour moteur électrique. Celle-ci comprend un trou de passage central pour le collecteur du moteur électrique et des éléments de guidage pour recevoir au moins un porte-balai en liaison glissière sur la platine selon une direction radiale au trou de passage central.

La platine est agencée pour permettre le montage du porte-balai en liaison glissière sur la platine en engageant le porte-balai avec les éléments de guidage dans le sens allant de la périphérie de la platine vers le trou de passage central. De ce fait, il est avantageusement possible de monter la platine sur le stator du moteur avant de monter les porte-balais sur la platine. En effet, une fois la platine montée sur le stator - avec le collecteur qui passe à travers le trou de passage central de la platine - les porte-balais peuvent être montés sur la platine puisqu'ils peuvent engager les éléments de guidage dans le sens qui va depuis la périphérie de la platine vers le trou de passage central. De plus, les balais vont immédiatement se trouver dans leur position opérationnelle contre le collecteur du moteur, ce qui évite qu'ils ne quittent les porte-balais. Le procédé de montage est donc simplifié par rapport au cas où le montage des porte-balais se fait depuis le trou de passage central de la platine vers sa périphérie puisque l'on peut se passer de moyens pour maintenir les balais dans les porte-balais, voire les porte-balais sur la platine, le temps du montage.

La platine comprend en outre une butée anti-retour pour chaque porte-balai après montage de ce dernier en liaison glissière sur la platine dans le sens allant de la périphérie de la platine vers le trou de passage central. Cette butée est élastiquement escamotable pour permettre le montage du porte-balai en liaison glissière sur la platine dans le sens allant de la périphérie de la platine vers le trou de passage central. Elle est de préférence escamotée par l'action du porte-balai sur la butée lors du montage dans le sens précité. En revanche, après montage du porte-balai en liaison glissière sur la platine, la butée s'oppose rigidement au déplacement du porte-balai dans le sens allant du trou de passage central vers la périphérie de la platine. La butée permet avantageusement d'éviter que le porte-balai, après montage, ne vienne se déplacer vers la périphérie de la platine et heurter le carter du moteur. La butée a donc un caractère asymétrique puisqu'elle oppose une forte résistance lorsque, après montage du porte-balai sur la platine, elle est sollicitée par le porte-balai dans le sens allant du trou de passage vers la périphérie de la platine alors que lors du montage du porte-balai sur la platine, elle est sollicitée de manière à n'opposer qu'un résistance élastique plus faible pour pouvoir l'escamoter élastiquement et permettre la mise en position définitive du porte-balai sur la platine. De préférence, la résistance opposée par la butée au déplacement du porte-balai dans le sens allant du trou de passage central vers la périphérie de la platine est au moins le double de la force maximale nécessaire pour escamoter élastiquement la butée lors du montage du porte-balai sur la platine. Plus avantageusement, la butée peut être conçue pour que seule sa déformation plastique permette au porte-balai de dépasser la butée dans le sens allant du trou de passage central vers la périphérie de la platine.

De préférence, la butée est métallique pour permettre à la butée de maintenir le porte balai.

De préférence, la platine est en tôle métallique et en ce que la butée et les éléments de guidage de la liaison glissière sont issue de la platine et formés par découpage et par déformation plastique de la tôle. Ainsi la platine est simple et est légère tout en étant solide du fait de sa structure métallique.

La platine est de préférence montée contre un palier non représenté et une culasse du moteur d'un démarreur non représenté. En particulier, seul une portion de la périphérie externe de la platine est pincée entre le palier et la culasse du moteur électrique.

De préférence, la distance entre le diamètre externe et minimum de cette portion est inférieure à la distance minimum entre le porte balai et le la culasse. Ainsi le porte balai est éloigné de la culasse et ne transmet pas de vibration directement à la culasse. En effet, les vibrations passent par la platine qui les atténue. Cela permet de réduire le bruit.

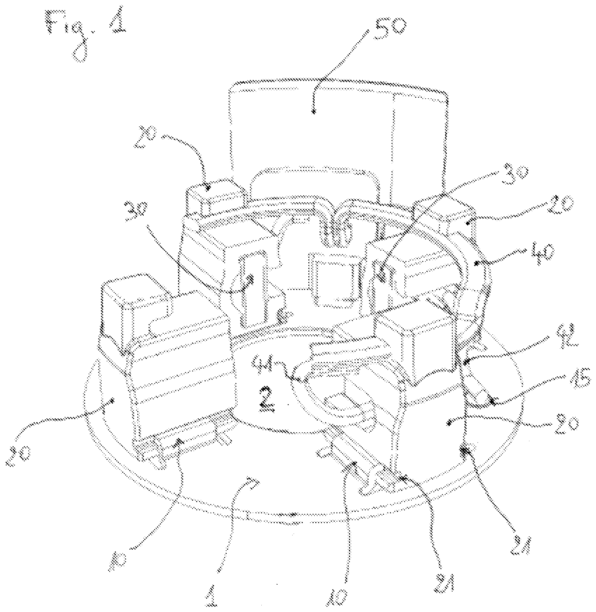

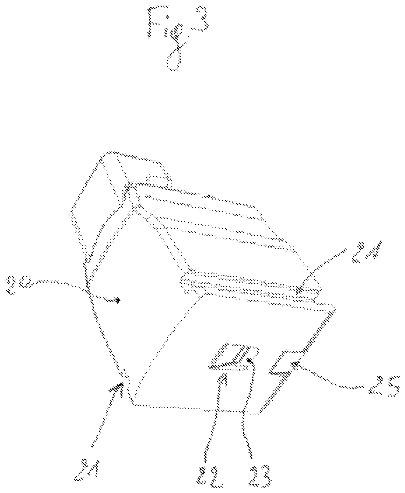

Les figures 1 à 3 montrent un mode de réalisation de l'invention. La figure 1 illustre l'ensemble porte-balais qui comprend une platine 1 portant un nombre pair de porte-balais 20. En l'occurrence, le nombre de porte-balais 20 est de quatre, mais il peut être différent. Les porte-balais 20 sont disposés radialement par rapport à un trou central 2 de la platine 1 qui est prévu pour le passage du collecteur du moteur (non représenté). Les porte-balais 20 sont répartis autour du trou de passage central 2. Chaque porte-balai 20 porte un balai 30 qui est contraint élastiquement en direction de l'axe du trou de passage central 2, autrement dit vers le collecteur du moteur. La contrainte élastique peut être classiquement fournie par un ressort hélicoïdal (non représenté) disposé dans le fond du porte-balai 20. Pour la connexion électrique du moteur, un conducteur rigide 40 traverse une pièce support 50 en matière isolante et est maintenu en place dans des logements prévus à cet effet sur le dessus des porte-balais 20. Le conducteur 40 est relié à un balai 30 sur deux par le biais d'autres conducteurs 41 soudés au conducteur 40 tandis que les autres balais 30 sont connectés à des emplacements 15 prévus à cet effet de la platine 1 qui est reliée à la masse du moteur.

Pour chaque porte-balai 20, la platine 1 comprend une glissière formée par deux ailes 10 ayant un profil en 'L' et qui se font face. Chaque porte-balai 20 comporte de chaque côté en partie inférieure une rainure latérale 21 coopérant avec un volet 10 respectif pour le montage du porte-balai 20 en liaison glissière sur la platine 1.

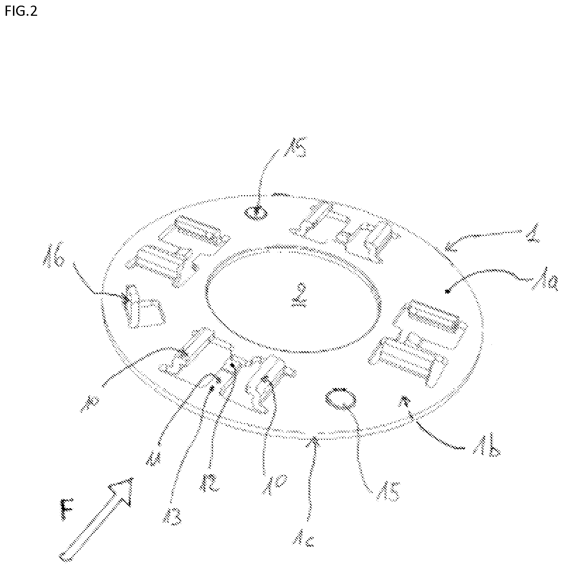

Comme cela est visible sur la figure 2, pour chaque porte-balai 20, la platine 1 comprend aussi une lame élastique 11 formant une butée anti-retour pour le porte-balai 20 après avoir été monté sur la platine 1. La lame 11 s'étendant sensiblement radialement par rapport au trou de passage central 2. Elle est agencée par une extrémité 13 sur la platine 1 du côté vers la périphérie 1c de la platine 1. L'extrémité 12 opposée de la lame 11 est libre et disposée du côté vers le trou de passage central 2. L'extrémité opposée 12 est prévue pour venir en contact avec le porte-balai 20 pour assurer la fonction de butée pour celui-ci après son montage sur la platine 1. Pour cela, l'extrémité 12 de la lame est pliée vers le haut pour faire saillie dans le passage défini entre les volets 10 pour le porte-balai 20. Le porte-balai 20 présente un évidement 22 ménagé dans sa face inférieure avec une surface sensiblement verticale 23 du côté avant. Par côté avant, il faut comprendre le côté du porte-balai 20 depuis lequel fait saillie le balai 30 hors du porte-balai et qui se présente devant le collecteur du moteur lorsque l'ensemble porte-balai est en place sur le stator du moteur. L'évidement 22 du porte-balai 20 est prévu pour être engagé par l'extrémité 12 de la lame 11 lorsque le porte balai 20 est monté sur la platine 1. L'extrémité 12 vient en appui contre la surface 23 de l'évidement 22 en cas de sollicitation du porte-balais dans le sens allant du trou de passage central 2 vers la périphérie 1c de la platine 1, ce qui a pour effet de bloquer le déplacement du porte-balai 20 dans ce sens. Cela évite avantageusement que le porte-balai 20 ne puisse reculer dans la glissière formée par les ailes 10 et entrer en contact avec le carter du moteur.

Comme cela est visible sur la figure 2, les ailes 10 formant glissière et la lame 11 peuvent être obtenues simplement par découpage et pliage et/ou emboutissage de la tôle formant la platine 1.

Le montage des éléments peut avantageusement être réalisé de la façon suivante. Dans un premier temps, la platine 1 vierge de porte-balais 20 est fixée au stator du moteur dans lequel a été préalablement monté le rotor. La fixation de la platine 1 au stator est réalisée par tout moyen approprié tel que des vis traversant des passages de vis (non représentés) réalisés dans la platine 1.

Les porte-balais 20 avec leurs balais 30, sont ensuite engagés dans leur glissière formée par les ailes 10 depuis la périphérie en direction du trou de passage central. Ce sens d'engagement est schématisé sur la figure 2 par la flèche F pour l'emplacement correspondant à un porte-balai 20 sur la platine 1. Pendant cette opération, la partie avant de la base du porte-balai 20 passe au-dessus de la lame 11 et vient en contact avec elle en l'occurrence avec sa partie d'extrémité 12 du fait qu'elle est pliée vers le haut.

Comme cela est visible sur la figure 2, la partie d'extrémité 12 forme un angle aigu par rapport à la direction de la glissière formée par les ailes 10 correspondantes, prise dans le sens de la périphérie 1c vers le trou de passage central 2. De ce fait, la partie avant de la base du porte-balai 20 repousse élastiquement la lame 11 vers le bas - c'est-à-dire dans le sens allant depuis la face la de la platine 1 qui reçoit le porte-balai 20 vers la face opposée 1b de la platine 1 - au fur et à mesure que le porte-balai 20 est poussé vers le trou de passage central 2. Autrement dit, la lame 11 subit une flexion sous l'action du porte-balai 20.

A un moment du déplacement du porte-balai 20 vers le trou de passage central 2, la partie d'extrémité 12 de la lame 11 passe en-dessous de la base du porte-balai, puis vient engager l'évidement 22 par retour élastique. Pour repousser facilement la lame 11 et faciliter le passage de son extrémité 12 sous la base du porte-balai 20, il peut être prévu un chanfrein 25 en face inférieure côté avant du porte-balai 20 pour l'engager dans des conditions favorables. L'on comprendra que la limite d'élasticité du matériau de la lame 11 n'est jamais dépassée lors de la flexion de la lame 11.

Une fois la partie d'extrémité 12 engagée dans l'évidement 22, le porte-balai 20 est dans sa position de montage définitive et les balais 30 sont en contact avec le collecteur du moteur. A partir de cette position, le porte-balai peut éventuellement encore avancer vers le trou de passage central 2, ce qui n'est pas gênant puisqu'il est retenu par le collecteur via son balai 30. En revanche, il ne lui est plus possible de reculer vers la périphérie 1c de la platine du fait que l'extrémité 12 de la lame 11 qui se met en appui contre la surface de butée 23. En effet, la sollicitation du porte-balai 20 sur la lame 11 se fait sensiblement suivant l'axe longitudinal de la lame 11 vers l'extrémité 13 de la lame 11 par laquelle elle est agencée sur la platine 1. Autrement dit, la sollicitation de la lame 11 se fait en compression, et non plus en flexion comme lors du montage du porte-balai 20 sur la platine 1 depuis la périphérie vers le trou de passage central 2. De ce fait, la lame 11 ne s'escamote pas élastiquement du passage du porte-balai 20 comme c'est le cas lors de son montage, mais au contraire elle s'oppose rigidement à son déplacement. La rigidité de la lame 11 ainsi opposée peut être extrêmement importante puisque la conformation de la lame 11 peut être définie de manière à ce que le dépassement de la butée formée par la lame 11 par le porte-balai 20 implique la destruction par flambage de la lame 11, étant précisé qu'un tel niveau de sollicitation n'est jamais atteint en pratique.

La conformation de l'extrémité 12 et de l'évidement 22 peut aussi être prévue pour empêcher le déplacement du porte-balai 20 vers le trou de passage central 2. Cela permet avantageux d'éviter ou limiter d'éventuelles vibrations avant-arrière du porte-balai 20 dans la glissière lorsque les balais sont usés et que les ressorts de balais n'ont plus une force suffisante pour plaquer le porte-balai 20 contre l'extrémité 12 de la lame 11.

Bien entendu, la présente invention n'est pas limitée aux exemples et au mode de réalisation décrits et représentés, mais elle est susceptible de nombreuses variantes accessibles à l'homme de l'art.

A titre d'exemple, la lame 11 formant butée peut être prévue latéralement par rapport à la direction de la liaison glissière entre le porte-balai 20 et la platine 1. Cela est réalisable en subdivisant l'une des ailes 10 pour n'en conserver qu'une partie avant et une partie arrière tandis que la portion de matière intermédiaire est conformée en forme de lame radiale avec une partie d'extrémité libre du côté vers le trou de passage central 2. La partie d'extrémité libre de la lame fait saillie dans le passage du porte balai et est prévu pour être escamotée élastiquement en direction latérale par le porte-balai lors de son montage sur la platine 1. Le porte balai 20 présente dans ce cas un évidement ou une encoche sur le côté dans laquelle vient s'engager l'extrémité libre de la lame pour réaliser la fonction de butée de la même manière que dans le cas de l'évidement 22.

Selon un autre exemple, il peut être prévu que la butée anti-retour soit escamotée élastiquement lors du montage du porte-balai sur la platine par un outil approprié au lieu de l'être par l'action du porte-balai sur la butée. Cependant, le fait que ce soit l'action du porte-balai sur la butée qui l'escamote élastiquement est avantageux du fait qu'il n'est pas nécessaire de recourir à un outil à cette fin.

## Revendications

1. Démarreur pour moteur thermique de véhicule automobile, comprenant un moteur électrique, le moteur électrique comprenant un ensemble porte-balais pour moteur électrique, un collecteur, une culasse et un palier, l'ensemble porte balais comprenant :
• au moins un porte balai (20)
• une platine (1) support de ce porte-balais comprenant :
- un trou de passage central (2) pour le collecteur du moteur électrique;
- des éléments de guidage (10) recevant au moins le porte-balai (20) en liaison glissière sur la platine selon une direction radiale au trou de passage central (2),
la platine étant agencée pour permettre le montage du porte-balai en liaison glissière sur la platine en engageant le porte-balai avec les éléments de guidage dans le sens allant de la périphérie (1c) de la platine vers le trou de passage central (2) ;
la platine comprenant en outre une butée anti-retour (11) pour chaque porte-balai (20) après montage de ce dernier en liaison glissière sur la platine , la butée s'opposant rigidement au porte balai au moins dans le sens (F) allant de la périphérie (1c) de la platine vers le trou de passage central (2),
dans laquelle :
- la butée est élastiquement escamotable pour permettre le montage du porte-balai en liaison glissière sur la platine dans le sens (F) allant de la périphérie de la platine (1c) vers le trou de passage central (2) ; et
- la butée s'oppose rigidement au déplacement du porte-balai dans le sens allant du trou de passage central (2) vers la périphérie (1c) de la platine (1) **caractérisé en ce que** la platine est en tôle métallique et **en ce que** la butée et les éléments de guidage de la liaison glissière sont issue de la platine et formés par découpage et par déformation plastique de la tôle.

2. Démarreur selon la revendication 1, dans lequel le porte balai est éloigné de la culasse.

3. Démarreur selon l'une des revendications précédentes, dans laquelle la butée (11) est prévue pour s'escamoter élastiquement sous l'action du porte-balai (20) sur la butée lors du montage du porte-balai en liaison glissière sur la platine dans le sens (F) allant de la périphérie (1c) de la platine vers le trou de passage central (2).

4. Démarreur selon l'une des revendication 1 à 3, dans laquelle la butée (11) est en outre agencée pour que, après montage du porte-balai (20) en liaison glissière sur la platine, la butée s'oppose rigidement également au déplacement du porte-balai dans le sens (F) allant de la périphérie (1c) de la platine vers le trou de passage central (2).

5. Démarreur selon l'une des revendications 1 à 4, dans laquelle la butée (11) est réalisée sous la forme d'une lame élastique s'étendant sensiblement radialement par rapport au trou de passage central (2), la lame étant agencée par une extrémité (13) sur la platine du côté vers la périphérie (1c) de la platine, l'extrémité opposée (12) de la lame étant libre et disposée du côté vers le trou de passage central (2) laquelle extrémité opposée est prévue pour venir en contact avec le porte-balai (20) pour s'opposer rigidement au déplacement de ce dernier dans le sens allant du trou de passage central (2) vers la périphérie (1c) de la platine, la butée (11) étant prévue pour s'escamoter élastiquement par flexion de la lame élastique sous l'action du porte-balai (20) lors du montage du porte-balai en liaison glissière sur la platine dans le sens (F) allant de la périphérie (1c) de la platine vers le trou de passage central (2).

6. Démarreur selon la revendication 5, dans laquelle la lame formant butée (11) est prévue pour s'escamoter élastiquement soit en direction de la face (1b) de la platine qui est opposée à celle (la) recevant le porte-balai (20), soit latéralement par rapport à la direction (F) de la liaison glissière entre le porte-balai et la platine.

7. Démarreur selon l'une quelconque des revendications 1 à 6, dans lequel le porte balai comprend :
- une base conformée pour pouvoir engager en liaison glissière les éléments de guidage (10) de la platine (1) ; et
- un évidement (22) dans la base apte à être engagé par la butée anti-retour (11) de la platine (1) pour s'opposer rigidement au déplacement du porte-balai au moins dans le sens allant du trou de passage central (2) vers la périphérie de la platine (1c).

8. Démarreur selon la revendication 7 en combinaison avec la revendication 6 ou 5, dans lequel 1' évidement (22) est agencé dans la face inférieure du porte-balai (20) et le porte-balai comprend un chanfrein (25) agencé en partie inférieure de la base lequel chanfrein est prévu pour engager la lame formant la butée anti-retour (11) de la platine (1) et l'escamoter élastiquement lors du montage du porte-balai en liaison glissière sur la platine (1) dans le sens (F) allant de la périphérie (1c) de la platine (1) vers le trou de passage central (2).

9. Démarreur selon l'une des revendications précédentes dans lequel la butée anti-retour (11) de la platine (1) étant engagée dans l'évidement (22) dans la base du porte-balai pour s'opposer rigidement au déplacement du porte-balai (20) au moins dans le sens allant du trou de passage central (2) vers la périphérie (1c) de la platine (1).

## Patentansprüche

1. Anlasser für eine Brennkraftmaschine eines Kraftfahrzeugs, der einen Elektromotor umfasst, wobei der Elektromotor eine Bürstenhalteranordnung für einen Elektromotor, einen Kollektor, ein Joch und ein Lager umfasst, wobei die Bürstenhalteranordnung umfasst:
• mindestens einen Bürstenhalter (20)
• eine Stützplatte (1) für diesen Bürstenhalter, die umfasst:
- ein zentrales Durchgangsloch (2) für den Kollektor des Elektromotors;
- Führungselemente (10), die mindestens den Bürstenhalter (20) in Gleitverbindung auf der Platte entlang einer zum zentralen Durchgangsloch (2) radialen Richtung aufnehmen,
wobei die Platte so gestaltet ist, dass sie die Montage des Bürstenhalters in Gleitverbindung auf der Platte ermöglicht, indem der Bürstenhalter mit den Führungselementen in Richtung vom Rand (1c) der Platte zum zentralen Durchgangsloch (2) hin umgriffen wird; wobei die Platte ferner einen Rücklaufstopper (11) für jeden Bürstenhalter (20) nach dessen Montage in Gleitverbindung auf der Platte umfasst, wobei der Stopper dem Bürstenhalter zumindest in Richtung (F) vom Rand (1c) der Platte zum zentralen Durchgangsloch (2) hin starr entgegensteht,
wobei:
- der Stopper federnd versenkbar ist, um die Montage des Bürstenhalters in Gleitverbindung auf der Platte in Richtung (F) vom Rand der Platte (1c) zum zentralen Durchgangsloch (2) hin zu ermöglichen; und
- der Stopper der Verlagerung des Bürstenhalters in Richtung vom zentralen Durchgangsloch (2) zum Rand (1c) der Platte (1) starr entgegensteht, **dadurch gekennzeichnet, dass** die Platte aus Metallblech ist und dass der Stopper und die Führungselemente der Gleitverbindung materialeinheitlich mit der Platte sind und durch Schneiden und plastisches Verformen des Blechs gebildet sind.

2. Anlasser nach Anspruch 1, wobei der Bürstenhalter vom Joch entfernt ist.

3. Anlasser nach einem der vorhergehenden Ansprüche, wobei der Stopper (11) dazu vorgesehen ist, unter der Einwirkung des Bürstenhalters (20) auf den Stopper bei der Montage des Bürstenhalters in Gleitverbindung auf der Platte in Richtung (F) vom Rand (1c) der Platte zum zentralen Durchgangsloch (2) hin federnd versenkt zu werden.

4. Anlasser nach einem der Ansprüche 1 bis 3, wobei der Stopper (11) ferner so angeordnet ist, dass der Stopper nach der Montage des Bürstenhalters (20) in Gleitverbindung auf der Platte der Verlagerung des Bürstenhalters in Richtung (F) vom Rand (1c) der Platte zum zentralen Durchgangsloch (2) hin starr entgegensteht.

5. Anlasser nach einem der Ansprüche 1 bis 4, wobei der Stopper (11) in Form einer federnden Zunge ausgeführt ist, die sich in Bezug auf das zentrale Durchgangsloch (2) im Wesentlichen radial erstreckt, wobei die Zuge an einem Ende (13) auf der Platte auf der zum Rand (1c) der Platte weisenden Seite angeordnet ist, wobei das entgegengesetzte Ende (12) der Zunge frei beweglich ist und auf der zum zentralen Durchgangsloch (2) weisenden Seite angeordnet ist, wobei das entgegengesetzte Ende dazu vorgesehen ist, mit dem Bürstenhalter (20) in Kontakt zu gelangen, um dessen Verlagerung in Richtung vom zentralen Durchgangsloch (2) zum Rand (1c) der Platte hin starr entgegenzustehen, wobei der Stopper (11) dazu vorgesehen ist, durch Durchbiegung der federnden Zunge unter der Einwirkung des Bürstenhalters (20) bei der Montage des Bürstenhalters in Gleitverbindung auf der Platte in Richtung (F) vom Rand (1c) der Platte hin zum zentralen Durchgangsloch (2) federnd versenkt zu werden.

6. Anlasser nach Anspruch 5, wobei die den Stopper (11) bildende Zunge dazu vorgesehen ist, entweder in Richtung der Seite (1b) der Platte, die zu der (1a) den Bürstenhalter (20) aufnehmenden entgegengesetzt ist, oder seitlich in Bezug auf die Richtung (F) der Gleitverbindung zwischen dem Bürstenhalter und der Platte federnd versenkt zu werden.

7. Anlasser nach einem der Ansprüche 1 bis 6, wobei der Bürstenhalter umfasst:
- einen Sockel, der dazu ausgebildet ist, in die Führungselemente (10) der Platte (1) in Gleitverbindung zu greifen; und
- eine Vertiefung (22) in dem Sockel, die geeignet ist, vom Rücklaufstopper (11) der Platte (1) ergriffen zu werden, um der Verlagerung des Bürstenhalters zumindest in Richtung vom zentralen Durchgangsloch (2) zum Rand der Platte (1c) hin starr entgegenzustehen.

8. Anlasser nach Anspruch 7 in Verbindung mit Anspruch 6 oder 5, wobei die Vertiefung (22) in der Unterseite des Bürstenhalters (20) angeordnet ist und der Bürstenhalter eine Abschrägung (25) umfasst, die im unteren Teil des Sockels angeordnet ist, wobei die Abschrägung dazu vorgesehen ist, die die Rücklaufsperre (11) der Platte (1) bildende Zunge zu umgreifen und sie bei der Montage des Bürstenhalters in Gleitverbindung auf der Platte (1) in Richtung (F) vom Rand (1c) der Platte (1) zum zentralen Durchgangsloch (2) hin federnd zu versenken.

9. Anlasser nach einem der vorhergehenden Ansprüche, wobei der Rücklaufstopper (11) der Platte (1) in die Vertiefung (22) im Sockel des Bürstenhalters greift, um der Verlagerung des Bürstenhalters (20) zumindest in Richtung vom zentralen Durchgangsloch (2) zum Rand (1c) der Platte (1) hin starr entgegenzusehen.

## Claims

1. Starter for a motor vehicle heat engine, comprising an electric motor, the electric motor comprising a brush-holder assembly for an electric motor, a commutator, a yoke frame and a bearing, the brush-holder assembly comprising:
• at least one brush-holder (20)
• a support plate (1) for this brush-holder comprising:
- a central through hole (2) for the commutator of the electric motor;
- guiding elements (10) receiving at least the brush-holder (20) with runner link on the plate in a direction radial to the central through-hole (2),
the plate being arranged to allow the mounting of the brush-holder with runner link on the plate by engaging the brush-holder with the guiding elements in the direction going from the periphery (1c) of the plate to the central through-hole (2);
the plate further comprising an anti-return abutment (11) for each brush-holder (20) after mounting the latter with runner link on the plate, the abutment rigidly opposing the brush-holder at least in the direction (F) going from the periphery (1c) of the plate to the central through-hole (2),
wherein:
- the abutment is elastically retractable to allow the mounting of the brush-holder with runner link on the plate in the direction (F) going from the periphery of the plate (1c) to the central through-hole (2); and
- the abutment rigidly opposes the displacement of the brush-holder in the direction going from the central through-hole (2) to the periphery (1c) of the plate (1),
**characterized in that** the plate is made of sheet metal and **in that** the abutment and the guiding elements of the runner link are formed from the plate by cutting and plastic deformation of the sheet.

2. Starter according to Claim 1, wherein the brush-holder is away from the yoke frame.

3. Starter according to one of the preceding claims, wherein the abutment (11) is provided to be elastically retracted under the action of the brush-holder (20) on the abutment during the mounting of the brush-holder with runner link on the plate in the direction (F) going from the periphery (1c) of the plate to the central through-hole (2).

4. Starter according to one of Claims 1 to 3, wherein the abutment (11) is also arranged so that, after mounting of the brush-holder (20) with runner link, the abutment also rigidly opposes the displacement of the brush-holder in the direction (F) going from the periphery (1c) of the plate to the central through-hole (12).

5. Starter according to one of Claims 1 to 4, wherein the abutment (11) is produced in the form of an elastic blade extending substantially radially relative to the central through-hole (2), the blade being arranged by one end (13) on the plate on the side towards the periphery (1c) of the plate, the opposite end (12) of the blade being free and disposed on the side towards the central through-hole (2), which opposite end is provided to come into contact with the brush-holder (20) to rigidly oppose the displacement thereof in the direction going from the central through-hole (2) to the periphery (1c) of the plate, the abutment (11) being provided to be retracted elastically by flexing of the elastic blade under the action of the brush-holder (20) upon the mounting of the brush-holder with runner link on the plate in the direction (F) going from the periphery (1c) of the plate to the central through-hole (2).

6. Starter according to Claim 5, wherein the abutment-forming blade (11) is provided to be retracted elastically either towards the face (1b) of the plate which is opposite to that (1c) receiving the brush-holder (20), or laterally relative to the direction (F) of the runner link between the brush-holder and the plate.

7. Starter according to one of Claims 1 to 6, wherein the brush-holder comprises:
- a base conformed to be able to engage with runner link the guiding elements (10) of the plate (1); and
- a void (22) in the base that can be engaged by the anti-return abutment (11) of the plate (1) to rigidly oppose the displacement of the brush-holder at least in the direction going from the central through-hole (2) to the periphery of the plate (1c).

8. Starter according to Claim 7 in combination with Claim 6 or 5, in which the void (22) is arranged in the bottom face of the brush-holder (20) and the brush-holder comprises a chamfer (25) arranged in the bottom part of the base, which chamfer is provided to engage the blade forming the anti-return abutment (11) of the plate (1) and retracts it elastically upon the mounting of the brush-holder with runner link on the plate (1) in the direction (F) going from the periphery (1c) of the plate (1) to the central through-hole (2) .

9. Starter according to one of the preceding claims, wherein the anti-return abutment (11) of the plate (1) is engaged in the void (22) in the base of the brush-holder to rigidly oppose the displacement of the brush-holder (20) at least in the direction going from the central-through hole (2) to the periphery (1c) of the plate (1).
